# EUROPEAN PATENT SPECIFICATION

(11) **EP 2 530 355 B1**
(45) Date of publication and mention of the grant of the patent: **04.09.2019**
(21) Application number: 12170370.6
(22) Date of filing: 31.05.2012
(51) Int. Cl.: F16F 9/48, F16F 9/46, B62K 25/08, F16F 9/34, B60G 17/08, B62K 25/04

(54) **Apparatus for position sensitive and/or adjustable suspension damping**
Vorrichtungen für lageempfindliche und/oder anpassbare Aufhängungsdämpfung
Appareil pour amortissement de suspension sensible au positionnement et/ou réglable

(30) Priority: 31.05.2011 US 201161491858 P; 10.05.2012 US 201261645465 P
(43) Date of publication of application: 05.12.2012
(73) Proprietor: Fox Factory, Inc., Scotts Valley, CA 95066 (US)
(72) Inventor: Ericksen, Everet Owen, CA 95063 (US); Cox, Christopher Paul, CA 95019 (US); Pelot, Sante, Santa Cruz, CA 95062 (US); Haugen, David M., Pacific Grove, CA 93950 (US)
(74) Representative: Casbon, Paul Richard

(56) References cited:
- EP-A1- 2 248 691
- DE-U1-202004 005 229
- GB-A- 2 104 183
- JP-A- H02 168 038
- US-A- 3 003 595
- US-A- 4 437 548
- US-A- 4 673 194
- US-A- 5 487 006
- US-A1- 2005 077 131
- US-A1- 2007 080 515
- US-B1- 6 296 092

## Description

### BACKGROUND OF THE INVENTION

### Field of the Invention

The invention relates generally to vehicle suspensions and, more specifically, to variable damping rates in vehicle shock absorbers and forks.

### Description of the Related Art

Vehicle suspension systems typically include a spring component or components and a damping component or components. Often, mechanical springs, like helical springs, are used with some type of viscous fluid-based damping mechanism, the spring and damper being mounted functionally in parallel. In some instances a spring may comprise pressurized gas and features of the damper or spring are user-adjustable, such as by adjusting the air pressure in a gas spring. A damper may be constructed by placing a damping piston in a fluid-filled cylinder (e.g., liquid such as oil). As the damping piston is moved in the cylinder, fluid is compressed and passes from one side of the piston to the other side. Often, the piston includes vents there-through which may be covered by shim stacks to provide for different operational characteristics in compression or extension.

Conventional damping components provide a constant damping rate during compression or extension through the entire length of the stroke. As the suspension component nears full compression or full extension, the damping piston can "bottom out" against the end of the damping cylinder. Allowing the damping components to "bottom out" may cause the components to deform or break inside the damping cylinder.

As the foregoing illustrates, what is needed in the art are improved techniques for varying the damping rate including to lessen the risk of the suspension "bottoming out."

### SUMMARY OF THE INVENTION

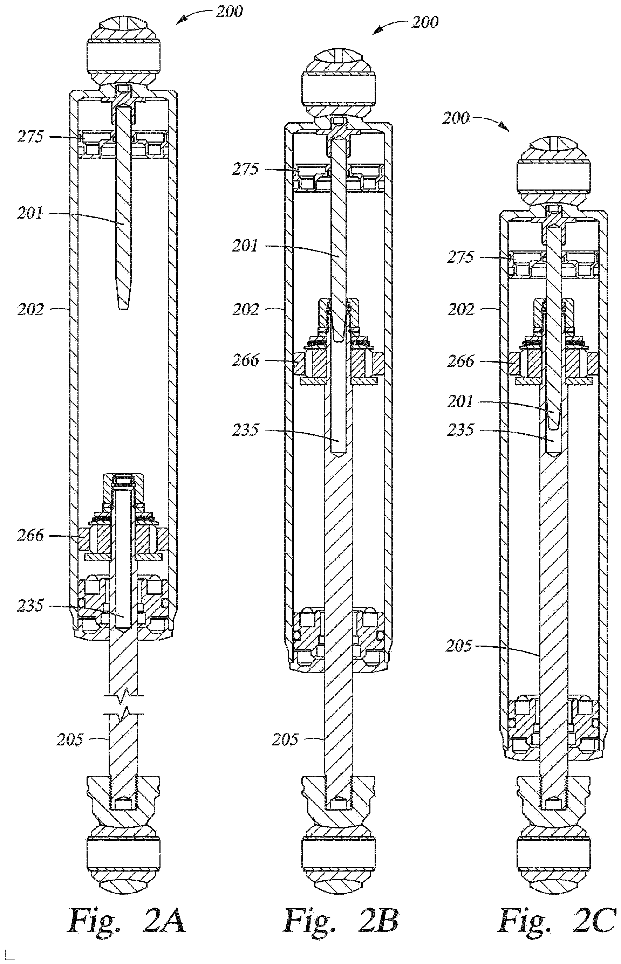

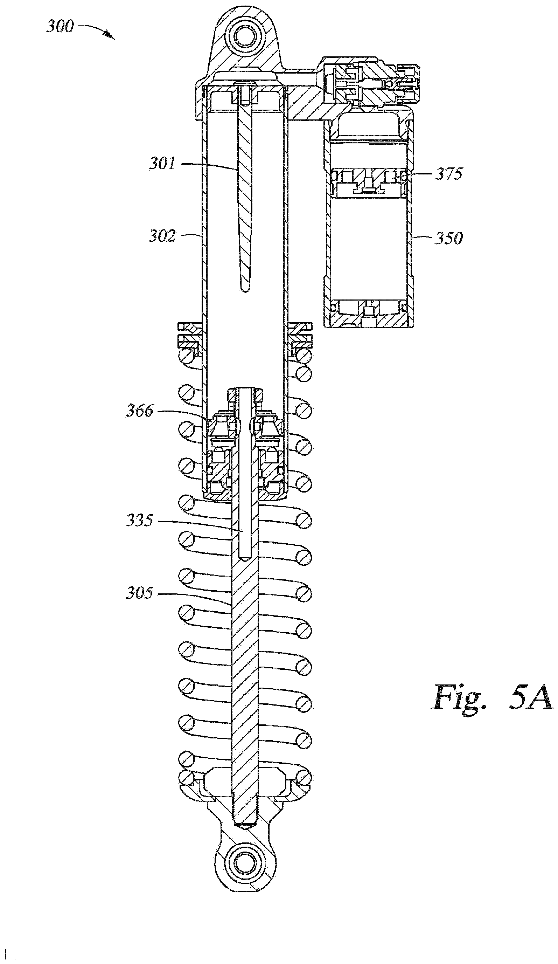

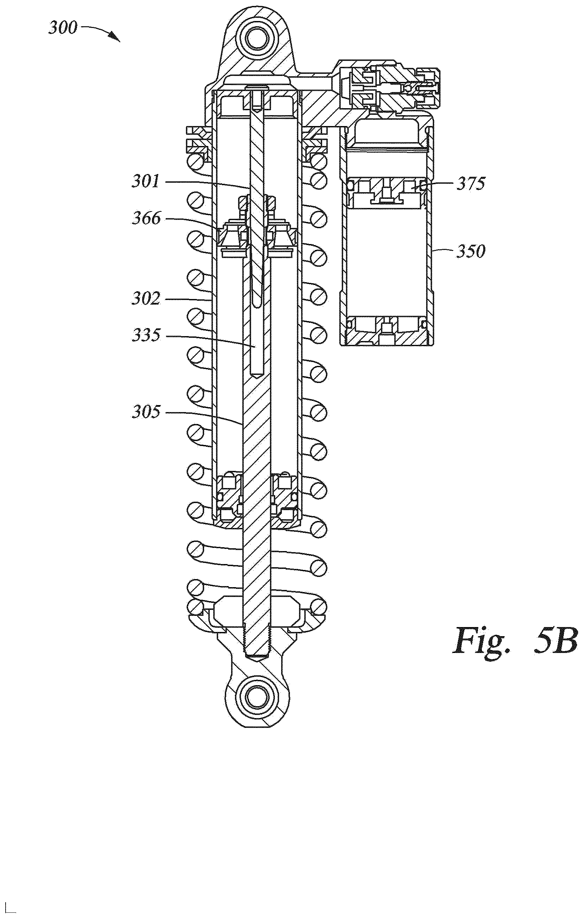

The invention disclosed herein provides a vehicle suspension damper comprising:
a cylinder containing damping fluid and a piston assembly comprising a piston, a piston rod, a first fluid path and a second fluid path through the piston assembly for permitting damping fluid to pass from a first side to a second side of the piston during a compression stroke of the vehicle suspension damper; and
a valve member for resisting fluid flow through the second fluid path;
said valve member provides a restriction to fluid flow through the second fluid path, the restriction being independent of the pressure of the damping fluid within the vehicle suspension damper, such pressures caused by compression. The restriction comprises an orifice or port that can be selectively obstructed and partially obstructed by the valve member. In use, any obstruction or partial obstruction is not affected by pressure of the damping fluid during a compression stroke. For example, partial obstruction may leave an area of the port or orifice open to fluid flow and that area is not affected by pressure changes in the damping fluid during compression of the damper. In one embodiment the vehicle suspension damper may be a monotube-type damper (an example of this type of damper is shown in Figure 2). In another embodiment the vehicle suspension damper is a "piggy-back" or reservoir type damper (an example of that type of damper is shown in Figure 5).

In some embodiments the cross-sectional area provided by the first and second fluid paths is held substantially constant for any given setting of the valve member. The area is only adjustable by the user or other control device external of the damper. In this way the area can be pre-set and held in that position for any duration. There is no risk that the area will change as a function of damping fluid pressures caused in compression, which would otherwise alter the damping characteristics of the second fluid path during use. This is not desirable.

In certain aspects the second fluid path is a fluid bypass for the first fluid channel.

Preferably, in use the restriction provided by said valve member is dependent on the position of said suspension damper in a compression stroke.

In the invention, said second fluid path comprises a bore in said piston rod, which bore has a first fluid port open to said first side of said piston and a second fluid port providing fluid communication with an interior of said piston, and the piston comprises a third fluid port providing fluid communication with the interior whereby, during a compression stroke, damping fluid may flow from the first side to the second side of the piston through the piston rod and the piston via the first, second and third fluid ports. It will be noted that in such an arrangement, the second fluid path does not pass through the piston from the first side to the second side. Rather the portion of the second fluid path passes from one side of the piston into the interior, and the interior is in fluid communication with the other side of the piston via the bore in the piston rod. In the invention the bore is a blind bore at the end of the piston rod where the piston is mounted.

In some aspects, the interior of the piston comprises an annular flow distributor in fluid communication with the second fluid port in the piston rod. In some embodiments, the second fluid port comprises two or more ports which provide fluid entry into the annular flow distributor, and the third fluid port in the piston comprises two more ports in fluid communication with the annular flow distributor. In this way, the second fluid path comprises multiple bypass channels through the piston assembly.

The valve member is movable into the bore during compression and out the bore during extension, so as to displace at least some of the damping fluid through the first, second and third fluid ports;
and optionally wherein said member is configured to enter said bore toward a maximum compression of said suspension damper. In one embodiment entry in to the bore may occur when the suspension damper is compressed about 50% or more.

Said valve member comprises a needle or needle-like member sized to be inserted into and withdrawn from said bore. In some embodiments the valve member is therefore not necessarily part of the piston assembly.

Advantageously, said vehicle suspension damper comprises a floating piston in said cylinder, with a gas on one side of said floating piston and said damping fluid on the other side, and wherein said needle is mounted at one end of said cylinder so that it projects through said floating piston and into the internal volume of the cylinder, and wherein said floating piston is annular so as to surround said needle and provide a fluid seal between either side thereof.

Preferably, during a compression stroke said valve member moves gradually toward a closed position with increasing compression stroke whereby bottoming-out is inhibited, and in extension said valve member moves more rapidly toward a fully open position to facilitate rebound of the suspension damper.

Advantageously, in use the restriction provided by said valve member is independent of the position of said suspension damper in a compression stroke.

In some embodiments, the valve member is adjustable to control the size of the restriction.

Preferably, the vehicle suspension damper further comprises a control apparatus, optionally adjustable by an electronic control apparatus, for effecting said adjustment. The control apparatus can be a user-operable apparatus, for example a lever. The electronic control apparatus can be a computer-controlled motor for example.

Preferably, said adjustability is provided by a control rod within said piston rod, which control rod has a first end connected to said valve member and a second end movable by said control apparatus, wherein in use movement of said second end effects corresponding movement of said first end and said valve member, and optionally wherein, during a compression stroke, the valve member stays in the position at which it was set by the control apparatus before the compression stroke. In one embodiment the control rod is rotatable about its longitudinal axis to move the second end. In another embodiment the control rod is slidable along its longitudinal axis to move the second end.

Advantageously, said valve member comprises a body having at least one fluid port and a wall, the body movable between a first position in which said fluid port is open to said second fluid path, and a second position in which said wall obstructs said second fluid path;
and optionally wherein said body is (i) movable to substantially any position, or (ii) movable to indexed positions, between said first and second positions.

In the invention, the vehicle suspension damper further comprises a third fluid flow path between said first and second sides of said piston. The arrangement is such that, in use, said first and second fluid flow paths permit flow of damping fluid during compression of said suspension damper, and said third fluid flow path permits flow of damping fluid during extension of said suspension damper, whereby said valve member provides said suspension damper with an adjustable damping rate, and said third fluid path provides said suspension damper with a rebound rate independent of the restriction provided by said valve member.

Advantageously, said piston assembly further comprises a compression shim arranged to provide resistance to fluid passing through both of said first and second fluid paths during a compression stroke of said vehicle suspension damper.

Other embodiments relate to a vehicle comprising a vehicle suspension damper as set out herein.

Certain embodiments disclosed herein provide a vehicle suspension damper comprising:
a cylinder containing damping fluid and a piston assembly comprising a piston, a piston rod, a first fluid path and a second fluid path through the piston assembly for permitting damping fluid to pass from a first side to a second side of the piston during a compression stroke of the vehicle suspension damper;
wherein said first and second fluid paths share a common resistance member which impedes fluid flow through the first and second fluid paths to said second side of the piston. In some embodiments the common resistance member may be a shim or shim stack.

In some embodiments the present disclosure provides a vehicle suspension damper comprising:
a piston assembly, a cylinder and an adjuster, wherein the piston assembly compresses fluid as it moves within the cylinder and the adjuster obstructs fluid flow from a first side of the piston to a second side of the piston.

In some embodiments the present disclosure provides a method for damping comprising:
applying a compression to a damping fluid;
forcing at least a portion of the compressed damping fluid through an adjustable flow regulator; and
delivering the regulated damping fluid into pressure communication with a gas charge.

In some embodiments of the present disclosure there is provided a spring for a suspension comprising:
a chamber in to a primary and a secondary portion;
a fluid flow path between the primary and secondary portions, the flow path including a valve wherein the valve automatically closes in response to a compressed condition of the suspension.

In some embodiments of the present disclosure there is provided a method of operating a suspension comprising:
compressing the suspension to a predetermined location;
creating a substantially sealed relationship between a primary chamber and a secondary chamber;
changing a rate of the suspension in response to creating the substantially sealed relationship.

One embodiment of the present disclosure sets forth a vehicle suspension damper that includes a cylinder having a compression chamber and a rebound chamber and containing at least a portion of a piston rod having a piston attached thereto, where an outer diameter of the piston engages an inner diameter of the cylinder and is relatively movable therein, and where the piston borders each of the compression chamber and the rebound chamber. The vehicle suspension damper further includes a damping liquid within the cylinder and a bypass fluid flow path connecting the compression chamber and the rebound chamber, which forms a fluid path extending between an inner diameter of the piston and a side surface of the piston directly bordering one of the compression or rebound chambers.

Another embodiment of the present disclosure sets forth a vehicle suspension damper that includes a cylinder and a damping liquid within the cylinder, the cylinder having a compression chamber and a rebound chamber and containing at least a portion of a piston rod having a piston attached thereto, where an outer diameter of the piston engages an inner diameter of the cylinder and is relatively movable therein, and where the piston borders each of the compression chamber and the rebound chamber. The piston includes multiple flow paths that enable the damping liquid to flow from the compression chamber to the rebound chamber. The multiple flow paths include a damping flow path that comprises a first fluid path extending between a first side surface of the piston directly bordering the compression chamber and a second side surface of the piston directly bordering the rebound chamber and a bypass flow path that comprises a fluid path extending between an inner diameter of the piston and one of the first side surface of the piston or the second side surface of the piston.

Yet another embodiment of the present disclosure sets forth a vehicle suspension system that includes a first damper unit. The first damper unit includes a cylinder having a compression chamber and a rebound chamber and containing at least a portion of a piston rod having a piston attached thereto, wherein an outer diameter of the piston engages an inner diameter of the cylinder and is relatively movable therein, and wherein the piston borders each of the compression chamber and the rebound chamber. The first damper unit further includes a damping liquid within the cylinder and a bypass fluid flow path connecting the compression chamber and the rebound chamber, which forms a fluid path extending between an inner diameter of the piston and a side surface of the piston directly bordering one of the compression or rebound chambers.

One advantage of some disclosed embodiments is that multiple bypass flow paths enable the vehicle suspension damper to be setup such that the damping rate changes (i.e., is increased) as the damper nears full compression. The increased damping rate, caused by fluid being forced through fewer flow paths formed by the multiple bypass flow paths causes the force opposing further compression of the damper to increase, thereby decreasing the chance that the damper "bottoms out."

According to some embodiments of the disclosure there is provided a vehicle suspension damper comprising:
a cylinder having a compression chamber and a rebound chamber and containing at least a portion of a piston rod having a piston attached thereto, wherein an outer diameter of the piston engages an inner diameter of the cylinder and is relatively movable therein, and wherein the piston borders each of the compression chamber and the rebound chamber;
a damping liquid within the cylinder; and
a bypass fluid flow path connecting the compression chamber and the rebound chamber, wherein the bypass flow path comprises a fluid path extending between an inner diameter of the piston and a side surface of the piston directly bordering one of the compression or rebound chambers.

Preferably, the bypass flow path further comprises a valve member restricting fluid flow through the piston.

Advantageously, the piston further comprises a damping flow path extending between a first side surface of the piston and a second side surface of the piston, the damping flow path comprising the valve member.

Preferably, the piston further comprises a damping flow path extending between a first side surface of the piston and a second side surface of the piston and including a valve member.

Advantageously, the vehicle suspension damper further comprises a second valve member connected to the cylinder and operable to restrict the bypass flow path at predetermined positions during a stroke of the damper and to be unrestrictive of the bypass flow path at other positions during the stroke.

Preferably, the second valve member comprises a needle.

Advantageously, the vehicle suspension damper further comprises a floating piston mounted in fluid communication with an interior of the cylinder, the floating piston separating the damping liquid from a volume of gas contained adjacent a second side of the floating piston.

Preferably, the vehicle suspension damper further comprising a reservoir, the reservoir comprising:
a reservoir cylinder having a first end and a second end, wherein the first end of the reservoir cylinder is fluidly coupled to the cylinder; and
the floating piston mounted inside the reservoir cylinder and axially movable relative thereto, the floating piston forming a reserve volume of damping liquid between a first side of the floating piston and the first end of the reservoir cylinder and forming a volume of gas between a second side of the floating piston and the second end of the reservoir cylinder.

Advantageously, the floating piston surrounds and moves relative to a needle.

Preferably, the needle restricts an opening of the bypass flow path proximate the inner diameter of the piston at predetermined positions during a stroke of the damper.

According to some embodiments there is disclosed a vehicle suspension damper comprising:
a cylinder having a compression chamber and a rebound chamber and containing at least a portion of a piston rod having a piston attached thereto, wherein an outer diameter of the piston engages an inner diameter of the cylinder and is relatively movable therein, and wherein the piston borders each of the compression chamber and the rebound chamber; and
a damping liquid within the cylinder,
wherein the piston includes multiple flow paths that enable the damping liquid to flow from the compression chamber to the rebound chamber, the multiple flow paths including:
   a damping flow path that comprises a first fluid path extending between a first side surface of the piston directly bordering the compression chamber and a second side surface of the piston directly bordering the rebound chamber, and
   a bypass flow path that comprises a second fluid path extending between an inner diameter of the piston and one of the first side surface of the piston or the second side surface of the piston.

Advantageously, the multiple flow paths further include a rebound flow path that comprises a fluid path extending between an inner diameter of the piston and one of the first side surface or the second side surface.

Preferably, the damping liquid is forced through the damping flow path and the bypass flow path during a compression stroke of the vehicle suspension damper, and wherein the damping liquid is forced through the rebound flow path during a rebound stroke of the vehicle suspension damper.

Advantageously, the bypass flow path further comprises a valve member restricting fluid flow through the piston and a second valve member connected to the cylinder and operable to restrict the bypass flow path at predetermined positions during a stroke of the damper and to be unrestrictive of the bypass flow path at other positions during the stroke.

According other embodiments there is disclosed a vehicle suspension system comprising:
a first damper unit that includes:
a cylinder having a compression chamber and a rebound chamber and containing at least a portion of a piston rod having a piston attached thereto, wherein an outer diameter of the piston engages an inner diameter of the cylinder and is relatively movable therein, and wherein the piston borders each of the compression chamber and the rebound chamber,
a damping liquid within the cylinder, and
a bypass flow path connecting the compression chamber and the rebound chamber, wherein the bypass flow path comprises a fluid path extending between an inner diameter of the piston and a side surface of the piston directly bordering one of the compression or rebound chambers.

Preferably, the bypass flow path further comprises a valve member restricting fluid flow through the piston.

Advantageously, the piston further comprises a damping flow path extending between a first side surface of the piston directly bordering the compression chamber and a second side surface of the piston directly bordering the rebound chamber, and wherein the piston includes a valve member.

Preferably, the vehicle suspension system further comprises a spring mounted coaxially with the first damper unit.

Advantageously, the first damper unit is included in a leg of a fork.

Preferably, the vehicle suspension system further comprises:
a second damper unit substantially similar to the first damper unit; and
one or more springs mounted substantially in parallel with the first and second damper units.

A vehicle suspension damper comprising:
a cylinder containing a piston assembly comprising a piston rod having a piston attached to a first end of the piston rod;
a working fluid within the cylinder;
a needle fixed to one end of the cylinder and configured to engage a bore formed in the first end of the piston rod; and
a valve located proximate to the first end of the piston rod and configured to surround the needle when the needle engages the bore, wherein the valve is configured to meter fluid forced out of the bore by the needle during compression through a clearance between an inner surface of the valve and an outer surface of the needle, and wherein the valve is configured to meter fluid entering the bore during rebound through a slot machined in a first surface of the valve.

Preferably, the vehicle suspension damper further comprises a nut fixed to the first end of the piston rod, wherein the valve is retained within the nut by a retainer clip, the valve having substantial radial clearance between an outer surface of the valve and an inner surface of the nut such that the positioning of the valve may be eccentric compared with the positioning of the needle.

Advantageously, the valve is an annular bushing constructed from a manganese bronze alloy such as high-strength yellow brass.

In certain aspects there is provided a vehicle suspension damper comprising:
a cylinder containing a piston assembly comprising a piston rod having a piston attached to a first end of the piston rod;
a working fluid within the cylinder;
a needle fixed to one end of the cylinder and configured to engage a bore in the first end of the piston rod; and
an annular floating piston mounted coaxially around the needle.

Preferably, the annular floating piston forms a volume of gas between a first side of the annular floating piston and a first end of the cylinder, and wherein the annular floating piston forms a volume of the working fluid between a second side of the annular floating piston and a second end of the cylinder.

In certain aspects there is provided a vehicle suspension system comprising:
a first damper unit that includes:
a cylinder containing a piston assembly comprising a piston rod having a piston attached to a first end of the piston rod,
a working fluid within the cylinder,
a needle fixed to one end of the cylinder and configured to engage a bore in the first end of the piston rod, and
a valve located proximate to the first end of the piston rod and configured to surround the needle when the needle engages the bore, wherein the valve is configured to meter fluid forced out of the bore by the needle during compression through a clearance between an inner surface of the valve and an outer surface of the needle, and wherein the valve is configured to meter fluid entering the bore during rebound through a slot machined in a first surface of the valve.

Preferably, the vehicle suspension system further comprises a spring mounted coaxially with the first damper unit.

In certain aspects there is provided a vehicle suspension system comprising:
a first damper unit that includes:
   a cylinder containing a piston assembly comprising a piston rod having a piston attached to a first end of the piston rod,
   a working fluid within the cylinder,
   a needle fixed to one end of the cylinder and configured to engage a bore in the first end of the piston rod, and
   an annular floating piston mounted coaxially around the needle.

### BRIEF DESCRIPTION OF THE DRAWINGS

So that the manner in which the above recited features can be understood in detail, a more particular description, briefly summarized above, may be had by reference to certain example embodiments, some of which are illustrated in the appended drawings. It is to be noted, however, that the appended drawings illustrate only typical embodiments and are therefore not to be considered limiting the scope of the claims, which may admit to other equally effective embodiments.
Figure 1 shows an asymmetric bicycle fork having a damping leg and a spring leg, according to one example embodiment;
Figures 2A-2C show sectional side elevation views of a needle-type monotube damping unit in different stages of compression, according to one example embodiment;
Figure 3 shows a detailed view of the needle and bore at the intermediate position proximate to the "bottom-out" zone, according to one example embodiment;
Figures 4A and 4B illustrate the castellated or slotted valve, according to one example embodiment;
Figures 5A and 5B illustrate a damping unit having a "piggy back" reservoir, according to one example embodiment;
Figure 6 illustrates a half section, orthographic view of a damping unit, according to another example embodiment;
Figures 7A through 7E illustrate the piston of Figure 6, according to one example embodiment; and
Figures 8A and 8B illustrate the shaft of Figure 6, according to one example embodiment.
Figure 9 illustrates another damping unit having a "piggy back" reservoir, according to one example embodiment.
Figures 10 and 11 illustrate in cross section part of the damping unit of Figure 9 with a control rod in a first position and in a second position respectively.
Figures 12, 13 and 14 illustrate an eyelet assembly portion of the damping unit of Figure 9.
Figure 15 illustrates in schematic perspective a view a damping piston part of the damping unit of Figure 9.
Figure 16 illustrates in schematic perspective view a damping piston, shaft and eyelet assembly parts of the damping unit of Figure 9.
Figure 17 illustrates a detailed section view of the damping unit of Figure 9.
Figure 18 illustrates a schematic side cross section through a monotube damping unit, according to one example embodiment.
Figure 19 illustrates a schematic side cross section of an eyelet part of the monotube damping unit of Figure 18.
Figure 20 illustrates various aspects of another damping unit having a "piggy back" reservoir, according to one example embodiment.

For clarity, identical reference numbers have been used, where applicable, to designate identical elements that are common between figures. It is contemplated that features of one example embodiment may be incorporated in other example embodiments without further recitation.

### DETAILED DESCRIPTION

Integrated damper *I* spring vehicle shock absorbers often include a damper body surrounded by or used in conjunction with a mechanical spring or constructed in conjunction with an air spring or both. The damper often consists of a piston and shaft telescopically mounted in a fluid filled cylinder. The damping fluid (i.e., damping liquid) or damping liquid may be, for example, hydraulic oil. A mechanical spring may be a helically wound spring that surrounds or is mounted in parallel with the damper body. Vehicle suspension systems typically include one or more dampers as well as one or more springs mounted to one or more vehicle axles. As used herein, the terms "down", "up", "downward", "upward", "lower", "upper", and other directional references are relative and are used for reference only.

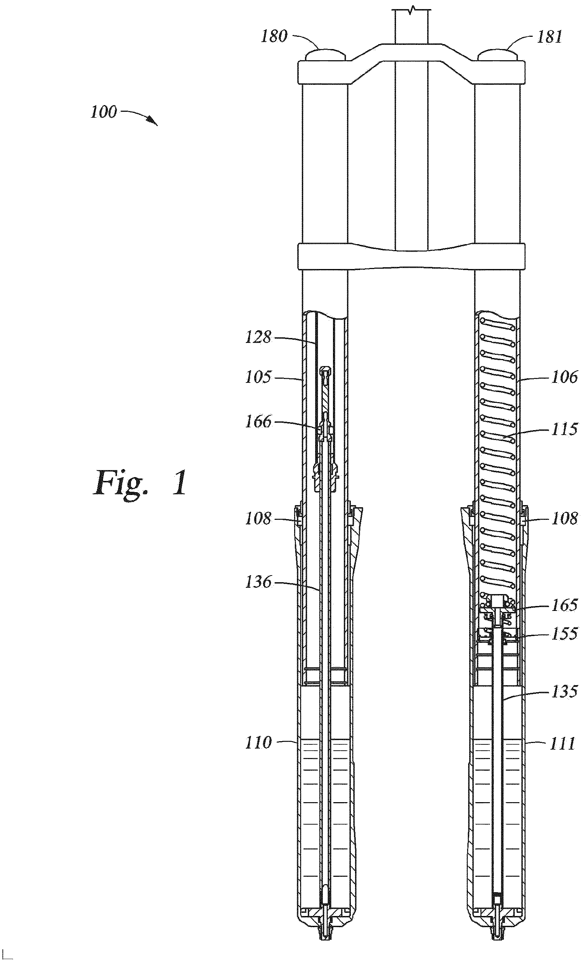

Figure 1 shows an asymmetric bicycle fork 100 having a damping leg and a spring leg, according to one example embodiment. The damping leg includes an upper tube 105 mounted in telescopic engagement with a lower tube 110 and having fluid damping components therein. The spring leg includes an upper tube 106 mounted in telescopic engagement with a lower tube 111 and having spring components therein. The upper legs 105, 106 may be held centralized within the lower legs 110, 111 by an annular bushing 108. The fork 100 may be included as a component of a bicycle such as a mountain bicycle or an off-road vehicle such as an off-road motorcycle. In some embodiments, the fork 100 may be an "upside down" or Motocross-style motorcycle fork.

In one embodiment, the damping components inside the damping leg include an internal piston 166 disposed at an upper end of a damper shaft 136 and fixed relative thereto. The internal piston 166 is mounted in telescopic engagement with a cartridge tube 128 connected to a top cap 180 fixed at one end of the upper tube 105. The interior volume of the damping leg may be filled with a damping liquid such as hydraulic oil. The piston 166 may include shim stacks (i.e., valve members) that allow a damping liquid to flow through vented paths in the piston 166 when the upper tube 105 is moved relative to the lower tube 110. A compression chamber is formed on one side of the piston 166 and a rebound chamber is formed on the other side of the piston 166. The pressure built up in either the compression chamber or the rebound chamber during a compression stroke or a rebound stroke provides a damping force that opposes the motion of the fork 100.

The spring components inside the spring leg include a helically wound spring 115 contained within the upper tube 106 and axially restrained between top cap 181 and a flange 165. The flange 165 is disposed at an upper end of the riser tube 135 and fixed thereto. The lower end of the riser tube 135 is connected to the lower tube 111 in the spring leg and fixed relative thereto. A valve plate 155 is positioned within the upper leg tube 106 and axially fixed thereto such that the plate 155 moves with the upper tube 106. The valve plate 155 is annular in configuration, surrounds an exterior surface of the riser tube 135, and is axially moveable in relation thereto. The valve plate 155 is sealed against an interior surface of the upper tube 106 and an exterior surface of the riser tube 135. A substantially incompressible lubricant (e.g., oil) may be contained within a portion of the lower tube 111 filling a portion of the volume within the lower tube 111 below the valve plate 155. The remainder of the volume in the lower tube 111 may be filled with gas at atmospheric pressure.

During compression of fork 100, the gas in the interior volume of the lower tube 111 is compressed between the valve plate 155 and the upper surface of the lubricant as the upper tube 106 telescopically extends into the lower tube 111. The helically wound spring 115 is compressed between the top cap 181 and the flange 165, fixed relative to the lower tube 111. The volume of the gas in the lower tube 111 decreases in a nonlinear fashion as the valve plate 155, fixed relative to the upper tube 106, moves into the lower tube 111. As the volume of the gas gets small, a rapid build-up in pressure occurs that opposes further travel of the fork 100. The high pressure gas greatly augments the spring force of spring 115 proximate to the "bottom-out" position where the fork 100 is fully compressed. The level of the incompressible lubricant may be set to a point in the lower tube 111 such that the distance between the valve plate 155 and the level of the oil is substantially equal to a maximum desired travel of the fork 100.

Figures 2A-2C show sectional side elevation views of a needle-type monotube damping unit 200 in different stages of compression, according to one example embodiment. In one embodiment, the components included in damping unit 200 may be implemented as one half of fork 100. In another embodiment, damping unit 200 may be implemented as a portion of a shock absorber that includes a helically-wound, mechanical spring mounted substantially coaxially with the damping unit 200. In yet other embodiments, damping unit 200 may be implemented as a component of a vehicle suspension system where a spring component is mounted substantially in parallel with the damping unit 200.

As shown in Figure 2A, the damping unit 200 is positioned in a substantially fully extended position. The damping unit 200 includes a cylinder 202, a shaft 205, and a piston 266 fixed on one end of the shaft 205 and mounted telescopically within the cylinder 202. The outer diameter of piston 266 engages the inner diameter of cylinder 202. In one embodiment, the damping liquid (e.g., hydraulic oil or other viscous damping fluid) meters from one side to the other side of the piston 266 by passing through vented paths formed in the piston 266. Piston 266 may include shims (or shim stacks) to partially obstruct the vented paths in each direction (i.e., compression or rebound). By selecting shims having certain desired stiffness characteristics, the damping effects can be increased or decreased and damping rates can be different between the compression and rebound strokes of the piston 266. The damping unit 200 includes an annular floating piston 275 mounted substantially co-axially around a needle 201 and axially movable relative thereto. The needle 201 is fixed on one end of the cylinder 202 opposite the shaft 205. A volume of gas is formed between the floating piston 275 and the end of cylinder 202. The gas is compressed to compensate for motion of shaft 205 into the cylinder 202, which displaces a volume of damping liquid equal to the additional volume of the shaft 205 entering the cylinder 202.

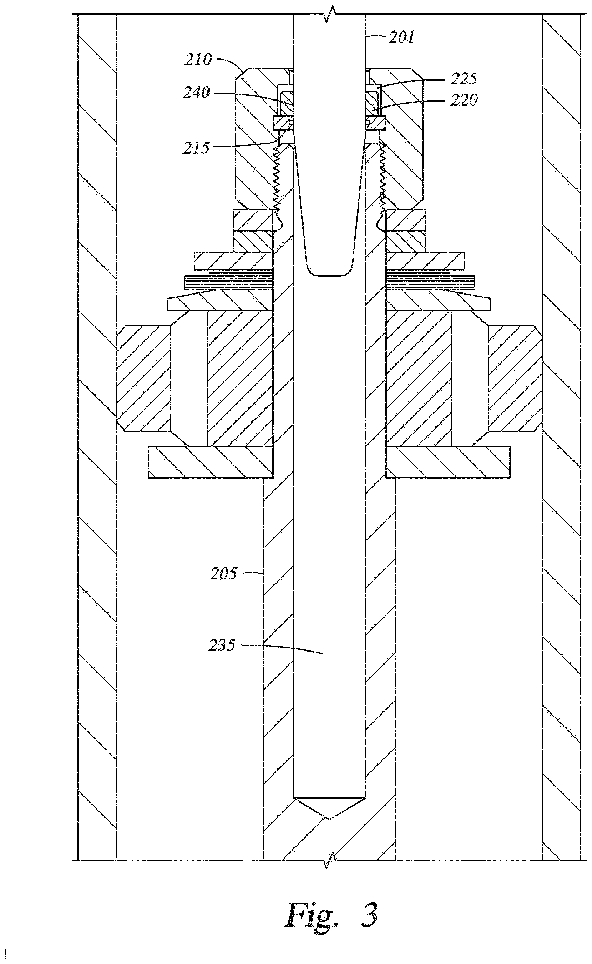

During compression, shaft 205 moves into the cylinder 202, causing the damping liquid to flow from one side of the piston 266 to the other side of the piston 266 within cylinder 202. Figure 2B shows the needle 201 and shaft 205 at an intermediate position as the damping unit 200 has just reached the "bottom-out" zone. In order to prevent the damping components from "bottoming out", potentially damaging said components, the damping force resisting further compression of the damping unit 200 is substantially increased within the "bottom-out" zone. The needle 201 (i.e., a valve member) compresses fluid in a bore 235, described in more detail below in conjunction with Figure 3, thereby drastically increasing the damping force opposing further compression of the damping unit 200. Fluid passes out of the bore around the needle through a valve that is restricted significantly more than the vented paths through piston 266. As shown in Figure 2C, the damping rate is increased substantially within the "bottom-out" zone until the damping unit 200 reaches a position where the damping unit 200 is substantially fully compressed.

Figure 3 shows a detailed view of the needle 201 and bore 235 at the intermediate position proximate to the "bottom-out" zone, according to one example embodiment. As shown in Figure 3, the needle 201 is surrounded by a check valve 220 contained within a nut 210 fixed on the end of shaft 205. During compression within the "bottom out" zone, the valve 220 is moved, by fluid pressure within the bore 235 and flow of fluid out of bore 235, upward against seat 225 of nut 210 and the bulk of escaping fluid must flow through the annular clearance 240 that dictates a rate at which the needle 201 may further progress into bore 235, thereby substantially increasing the damping rate of the damping unit 200 proximate to the "bottom-out" zone. The amount of annular clearance 240 between the exterior surface of the needle 201 and the interior surface of the valve 220 determines the additional damping rate within the "bottom-out" zone caused by the needle 201 entering the bore 235. In one embodiment, the needle 201 is tapered to allow easier entrance of the needle 201 into the bore 235 through valve 220.

During rebound within the "bottom out" zone, fluid pressure in the bore 235 drops as the needle 201 is retracted and fluid flows into the bore 235, causing the valve 220 to move toward a valve retainer clip 215 that secures the valve 220 within the nut 210. In one embodiment, the valve is castellated or slotted on the face of the valve 220 adjacent to the retainer clip 215 to prevent sealing the valve against the retainer clip 215, thereby forcing all fluid to flow back into the bore 235 via the annular clearance 240. Instead, the castellation or slot allows ample fluid flow into the bore 235 during the rebound stroke to avoid increasing the damping rate during rebound within the "bottom out" zone. The valve 220 is radially retained within the nut 210, which has a recess having a radial clearance between the interior surface of the recess and the exterior surface of the valve 220 that allows for eccentricity of the needle 201 relative to the shaft 205 without causing interference that could deform the components of damping unit 200.

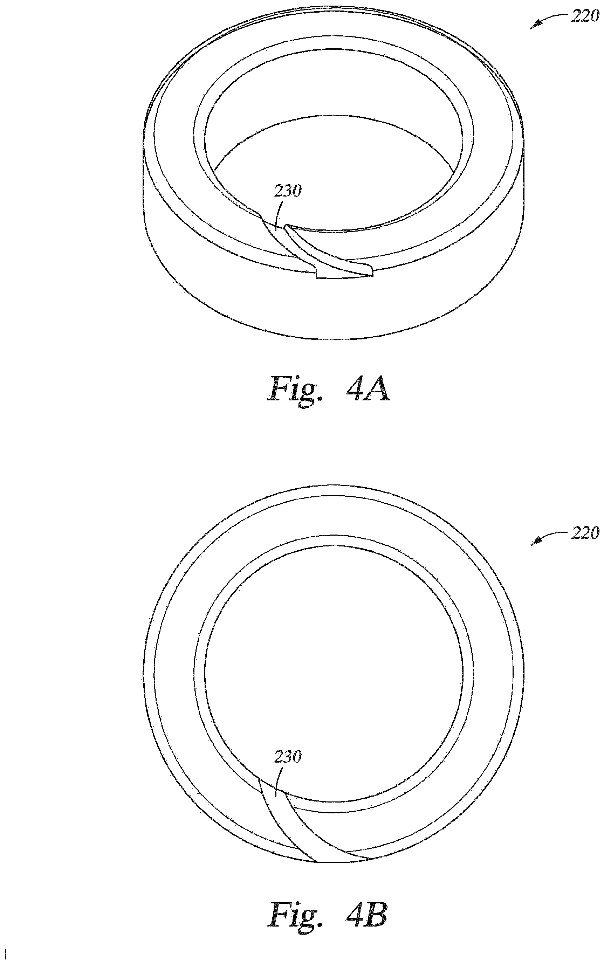

Figures 4A and 4B illustrate the castellated or slotted valve 220, according to one example embodiment. As shown in Figures 4A and 4B, the valve 220 is a washer or bushing having an interior diameter sized to have an annular clearance 240 between the interior surface of the valve 220 and the exterior surface of the needle 201 when the needle 201 passes through the valve 220. Different clearances 240 may be achieved by adjusting the interior diameter of the valve 220 in comparison to the diameter of the needle 201, which causes a corresponding change in the damping rate proximate to the "bottom-out" zone. A spiral face groove is machined into one side of the valve 220 to create the castellation or slot 230. It will be appreciated that the geometry of the slot 230 may be different in alternative embodiments and is not limited to the spiral design illustrated in Figures 4A and 4B. For example, the slot 230 may be straight (i.e., rectangular) instead of spiral, or the edges of the slot 230 may not be perpendicular to the face of the valve 220. In other words, the geometry of the slot 230 creates empty space between the surface of the retainer clip 215 and the surface of the valve 220 such that fluid may flow between the two surfaces.

When assembled, the valve 200 is oriented such that the side with the slot 230 is proximate to the upper face of the valve retainer clip 215, thereby preventing the surface of the valve 220 from creating a seal against the retainer clip 215. The slot 230 is configured to allow fluid to flow from cylinder 202 to bore 235 around the exterior surface of the valve 220, which has a larger clearance than the annular clearance 240 between the valve 220 and the needle 201. In one embodiment, two or more slots 230 may be machined in the face of the valve 220. In some embodiments, the valve 220 is constructed from high-strength yellow brass (i.e., a manganese bronze alloy) that has good characteristics enabling low friction between the valve 220 and the needle 201. In alternate embodiments, the valve 220 may be constructed from other materials having suitable characteristics of strength or coefficients of friction.

Figures 5A and 5B illustrate a damping unit 300 having a "piggy back" reservoir 350, according to another example embodiment. As shown in Figure 5A, damping unit 300, shown fully extended, includes a cylinder 302 with a shaft 305 and a piston 366 fixed on one end of the shaft 305 and mounted telescopically within the cylinder 302. Damping unit 300 also includes a needle 301 configured to enter a bore 335 in shaft 305. However, unlike damping unit 200, damping unit 300 does not include an annular floating piston mounted substantially co-axially around the needle 301 and axially movable relative thereto. Instead, the piggy back reservoir 350 includes a floating piston 375 configured to perform a similar function to that of floating piston 275. A volume of gas is formed between the floating piston 375 and one end of the piggy back reservoir 350. The gas is compressed to compensate for motion of shaft 305 into the cylinder 302. Excess damping liquid may enter or exit cylinder 302 from the piggy back reservoir 350 as the volume of fluid changes due to ingress or egress of shaft 305 from the cylinder 302. In Figure 5B, the damping unit 300 is shown proximate to the "bottom out" zone where needle 301 has entered bore 335.

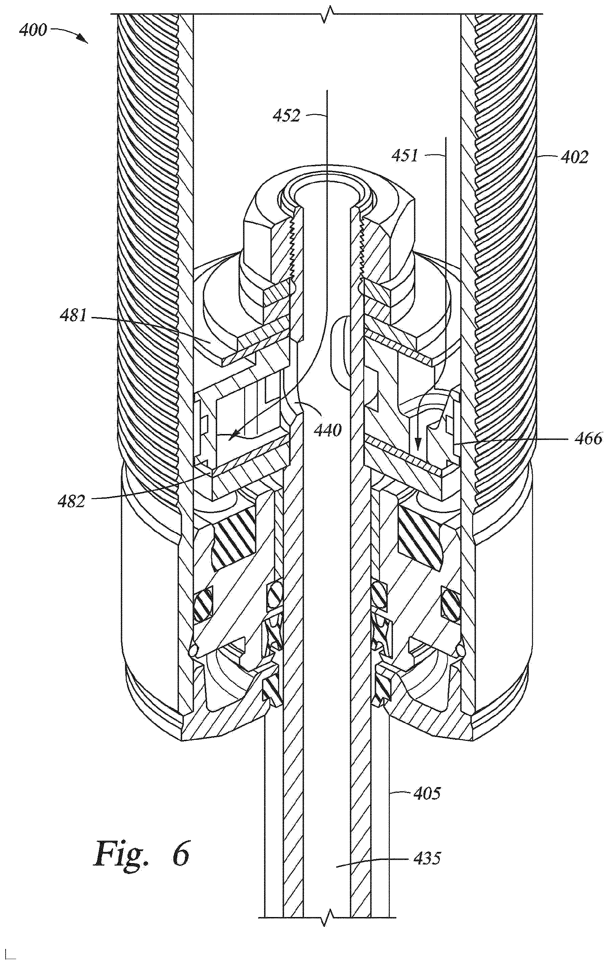

Figure 6 illustrates a half section, orthographic view of a damping unit 400, according to another example embodiment. As shown in Figure 6, damping unit 400 includes a piston 466 fixed on one end of a shaft 405 and mounted telescopically within a cylinder 402. The shaft 405 includes a bore 435 that enables ingress of a needle (e.g., 201, 301) to change the damping characteristics of the damping unit 400 proximate to the "bottom out" zone. The piston assembly includes a top shim stack 481 and a bottom shim stack 482 attached to the top face and bottom face of the piston 466, respectively, which enable different damping resistances to be set during the compression stroke and the rebound stroke. During operation, where a needle has not entered bore 435, the damping liquid flows from one side of the piston 466 to the other side through multiple flow paths 451, 452, and 453. In compression, a first flow path 451 (i.e., a damping flow path) allows the damping liquid to flow from an upper portion of the cylinder 402 through vented paths in the piston 466 and into a lower portion of the cylinder 402, forcing the bottom shim stack 482 away from the bottom face of the piston 466. A second flow path 452 (i.e., a bypass flow path) allows the damping liquid to flow from an upper portion of the cylinder 402 through the bore 435 and shaft ports 440 in shaft 405 and into additional vented paths in the piston 466 through the bottom shim stack 482 and into the lower portion of the cylinder 402. In rebound, a third flow path 453 (i.e., a rebound flow path, not shown in Figure 6) allows the damping liquid to flow from a lower portion of the cylinder 402, through different vented paths in the piston 466, through the top shim stack 481, and into an upper portion of the cylinder 402. In some embodiments, the first flow path 451 and the second flow path 452 may be associated with separate and distinct shim stacks. For example, the bottom shim stack 482 may be replaced by two shim stacks configured in a clover pattern and arranged such that a first shim stack covers the vented paths in the piston 466 corresponding to the first flow path 451 and a second shim stack covers the additional vented paths in the piston 466 corresponding to the second flow path 452.

When a needle just enters bore 435, the needle impedes the damping liquid in the upper portion of the cylinder 402 from flowing through the second flow path 452 due to the "plugging" effect of the needle blocking the entrance to the bore 435. However, the damping liquid may continue to pass through the piston 466 through the first flow path 451. In addition, some damping liquid may continue to flow out of ports 440 from bore 435 as the needle continues ingress into bore 435 and decreases the fluid volume inside the bore 435. It will be appreciated that the damping rate will increase as the needle blocks the second flow path 452, thereby forcing substantially all damping liquid in the upper portion of the cylinder 402 to move through piston 466 via the first flow path 451. At some point during ingress of the needle, the full diameter of the needle is adjacent to the shaft ports 440, substantially blocking additional damping liquid from leaving bore 435 through the shaft ports 440. Again, the damping rate will increase as the needle blocks the shaft ports 440 and fluid pressure rapidly builds up within bore 435 and acts on the needle to oppose any further compression of the damping unit 400.

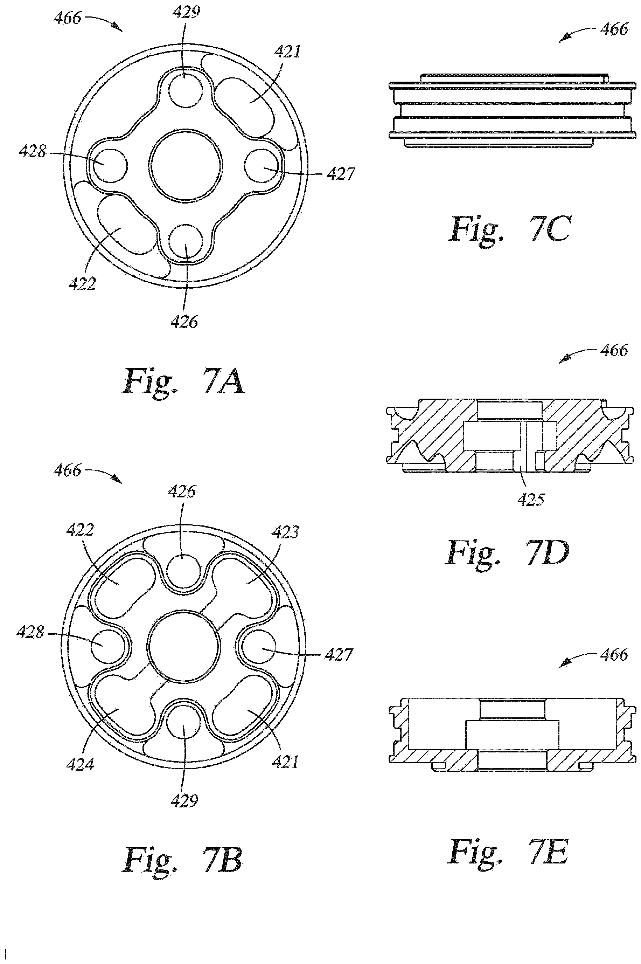

Figures 7A through 7E illustrate the piston 466 of Figure 6, according to one example embodiment. As shown in Figures 7A and 7B, the piston 466 includes two vented paths (i.e., 421, 422) that allow damping liquid to flow from the upper portion of the cylinder 402 to the lower portion of the cylinder 402 via the first flow path 451 (i.e., bypassing the top shim stack and entering the piston 466 proximate to the inner surface of cylinder 402). The piston 466 also includes two additional vented paths (i.e., 423, 424) that allow damping liquid to flow from the upper portion of the cylinder 402 to the lower portion of the cylinder 402 via the second flow path 452 (i.e, through the bore 435 and shaft ports 440). The additional vented paths are connected to the bore 435 via channels 425 that fluidly couple the additional vented paths to the shaft ports 440 in shaft 405 through a surface on the inner diameter of the piston 466. The four vented paths described above (i.e., 421-424) allow damping liquid to flow from an upper portion of the cylinder 402 to a lower portion of the cylinder 402 during a compression stroke. In rebound, yet another set of four vented paths (i.e., 426, 427, 428, 429) allow damping liquid to flow from the lower portion of the cylinder 402 to the upper portion of the cylinder 402 via the third flow path 453 (i.e., bypassing the bottom shim stack 482 and passing into the upper portion of the cylinder 402 through the top shim stack 481). Figure 7C shows a side view of the piston 466 of Figures 7A and 7B. Figure 7D shows a cross section of the piston 466 showing the inner diameter that is fit over shaft 405 as well as one channel 425 connected to one of the additional vented paths in the piston corresponding to the first second flow path 452. Figure 7E shows a cross section of the piston 466 showing vented paths 423 and 424.

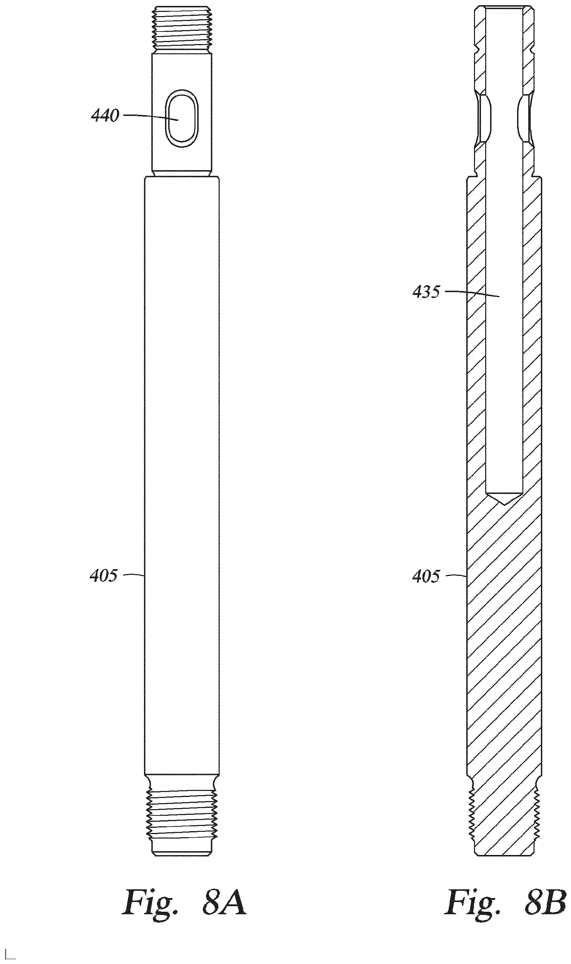

Figures 8A and 8B illustrate the shaft 405 of Figure 6, according to one example embodiment. As shown in Figures 8A and 8B, the shaft 405 includes a bore 435 formed (e.g., drilled, milled, etc.) into a top portion of the shaft. In one embodiment, the top portion of the shaft may have a smaller diameter than the body of the shaft 405, forming a seat a particular distance from one end of the shaft 405. The piston assembly including the piston 466 and the shim stacks may be mounted over the top portion of the shaft 405 and secured with a nut threaded onto the end of the shaft 405. In alternative embodiments, the nut may be press fit onto the shaft 405 or secured in any other technically feasible manner.

Shaft ports 440 may be formed through an outer face of the top portion of the shaft 405 proximate a surface on the inner diameter of the piston 466 when mounted on the shaft 405. The shaft ports 440 fluidly couple the bore 435 in the shaft 405 with the additional vented paths (i.e., 423, 424) in the piston 466 such that fluid may flow through the bore 435 via the second flow path 452. In other words, the second flow path 452 enables additional fluid to flow through the bottom shim stacks 482 when a needle is not blocking the bore 435.

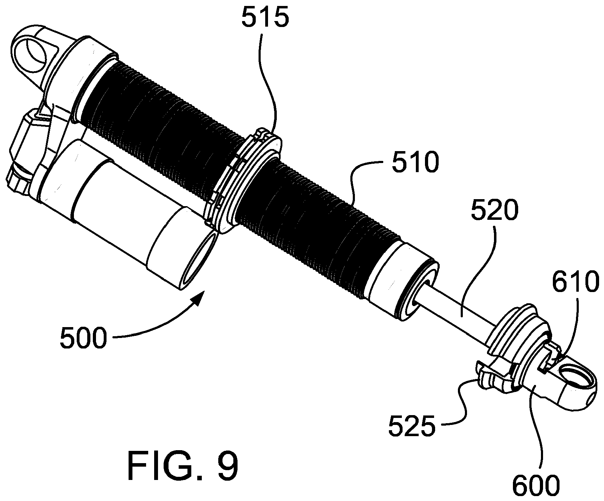

Figure 9 shows an embodiment of a shock absorber assembly 500 comprising an internal bypass damper. The shock absorber 500 includes a threaded body or cylinder 510 (having an adjustable threaded spring support 515 thereon), a piston rod or shaft 520, a lower eyelet assembly 600 including a lower spring support 525 and a damping adjustment lever 610.

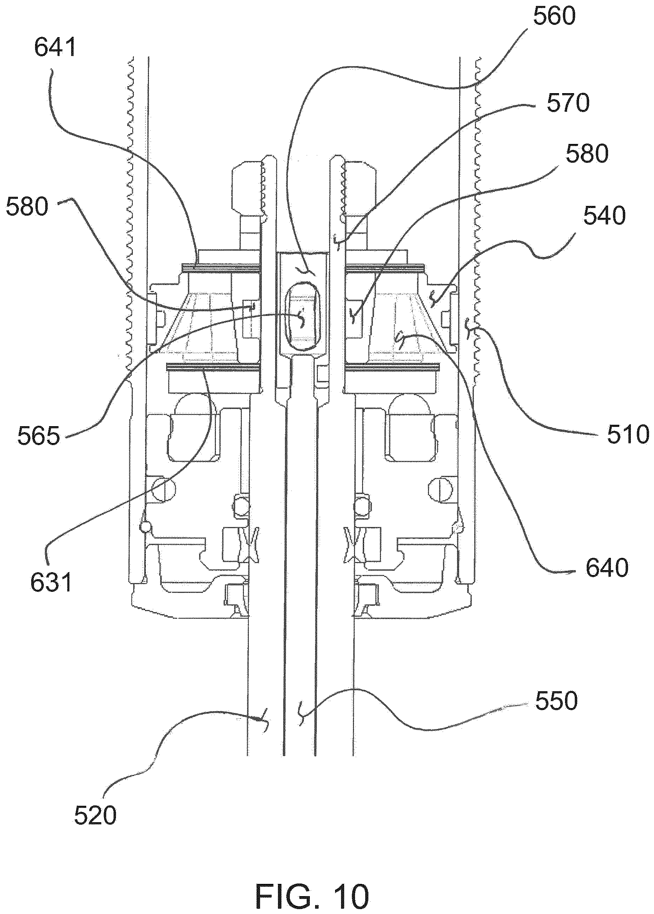

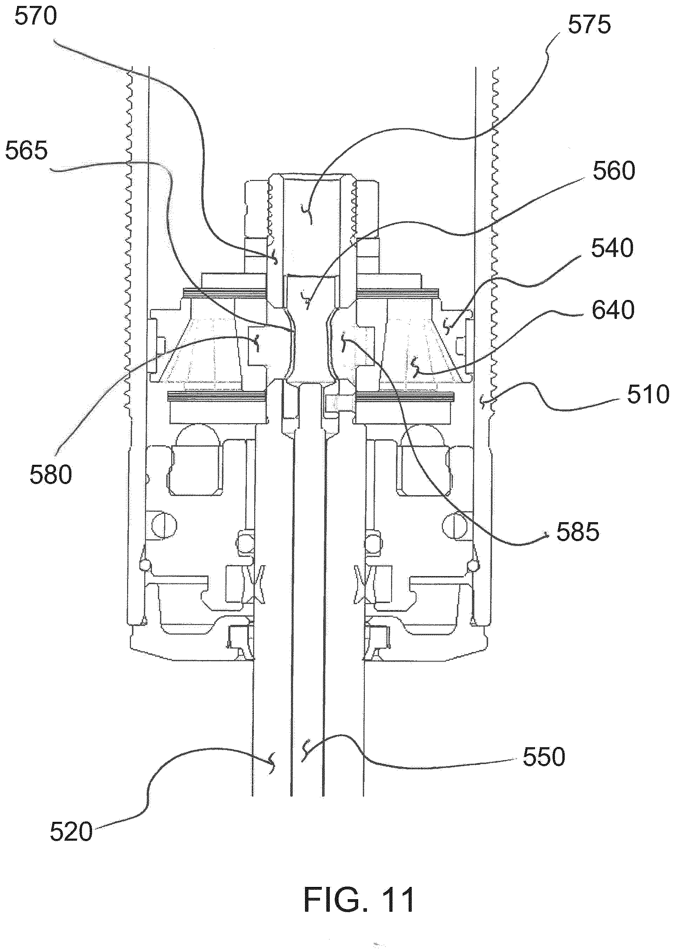

Figure 10 and Figure 11 show orthogonal sections through the same part of the shock 500. As shown a damping piston 540 is connected to an end of the piston rodpiston rod 520. Interior of the piston rod 520 is a control rod 550 which, when rotated, correspondingly rotates a valve 560. Alternatively the control rod 550 may be slidable longitudinally within the piston rod 520 to slide the valve 560 back and forward, rather than rotate it.

The valve 560 comprises a generally hollow cylindrical body that is open at one end to receive damping fluid from a valve recess 570 (described in greater detail below). The side wall of hollow cylindrical body is provided with two oppositely opposed passageways or ports 565 that are in fluid communication with the open end of the body, and through which damping fluid may flow in certain positions of the valve 560. The valve 560 is located within a valve recess 570 that is formed in one end of the piston piston rod 520. The valve recess 570 is open at one end to receive into its interior damping fluid from within the cylinder 510. Shaft windows 585 are provided in the side wall of the valve recess 570 that provide fluid communication between the interior of the valve recess 570 and an annular flow distributor 580 within the interior of the piston 540.

It is important to note that the valve 560 is in the same (open) position in both Figures 10 and 11, even though in the view of Figure 10, the passageways 565 are aligned with an axis perpendicular to the page and in Figure 11 the passageways 565 are aligned with the plane of the page. In both Figures 10 and 11 the passageways (or apertures) 565 of the valve 560 are aligned with the shaft windows 585 in the piston rod 520, thereby allowing fluid flow between the interior 575 (see Figure 11) of the valve recess 570 and the annular flow distributor 580. Looking at Figure 10, if the control rod 550 is rotated through ninety degrees the valve 560 is rotated by a corresponding amount so that the passageways 565 face a solid portion of the wall of valve recess 570 and as such the interior 575 of the valve recess 570 is closed to fluid communication with annular flow distributor 580.

In this way, the valve 560 is selectively movable between a first position in which, during compression of the shock 500, damping fluid may flow relatively freely through the interior 575 of the valve recess, into the valve 560, and out through the passageways 565 and shaft windows 585, and a second position in which damping fluid is obstructed from flowing along this path by the solid wall portion of the valve recess 570. The valve 560 may be positioned anywhere between the first and second positions, or at indexed positions therebetween, so as to provide a restriction to fluid flow, and thereby different damping characteristics for the shock 500.

It is important to note that, wherever the valve 560 is positioned, it is held in that position by the control rod 550 during use of the shock. This immobilization could be provided by friction between the control rod 550 and piston rod 520. This has the effect that the restriction provided by the valve 560 is not dependent on the damping fluid pressure generated during a compression. In other words, the size of the opening defined by the position of the valve 560 is not affected by the pressure of damping fluid as it fluctuates during compression/extension. Neither is there any threshold pressure to overcome before the valve 560 is operational: it remains in the position set by the user until further adjusted.

In another embodiment, the control rod 550 is caused to move during a compression stroke so that the valve 560 gradually moves from the first (open) position to the second (closed) position toward maximum compression or 'bottoming out'. This is a controlled movement as opposed to an uncontrolled movement caused by the pressure of damping fluid found in other designs of fluid bypass. Controlled movement of the valve 560 provides a position-sensitive damping function. The gradual movement may take place either across the whole compression stroke or only a part of it, for example the last one-third. Furthermore the gradual movement, or rate at which the valve closes, may be linear or non-linear. For example the rate of closure may increase toward the end of the compression. In one embodiment, the movement of the control rod 550 in this way may be achieved with a longitudinal groove or grooves provided on the surface of the control rod 550 in which one or more protrusion of the piston rod 520 is located. As the shock is compressed, action between the groove(s) and protrusion(s) causes the desired movement (e.g. rotation) of the control rod 550, and thereby the valve 560. It will be appreciated that the groove(s) could be provided on the interior of the piston rod 520 and the protrusion(s) provided on the control rod 550 to achieve a similar effect.

In other embodiments, adjustment of the control rod 550 is performed by a computer-controlled motor. The computer may have as inputs measured pressure of damping fluid in the cylinder and/or the position of the shock in the compression stroke, and the control rod 550 adjusted accordingly. When using the damping fluid pressure as an input, it is important to note that controlling the position according to a measured damping fluid pressure is functionally different to the valve 560 being opened and closed under direct influence of the pressure of damping fluid.

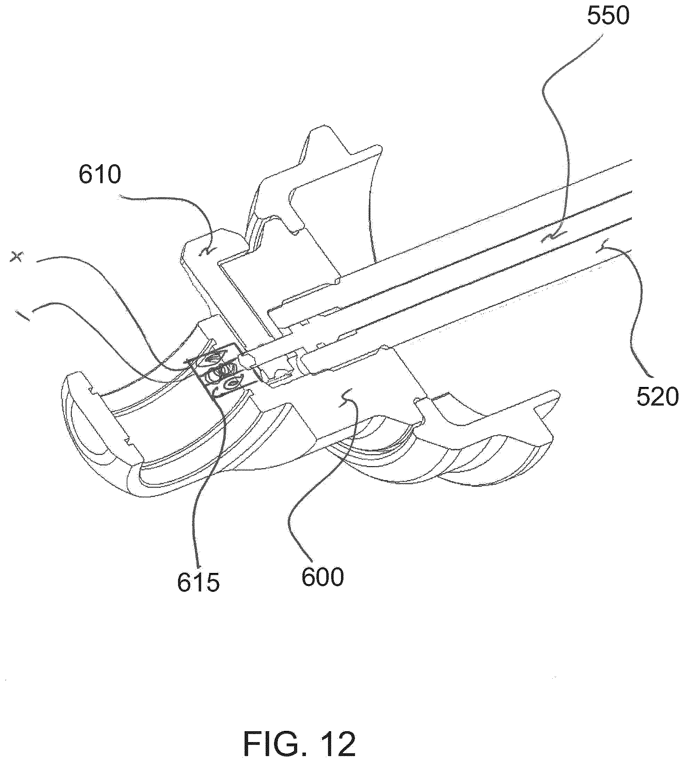

Figure 12 shows an embodiment of an eyelet assembly 600 as attached at an end of the piston rod 520 (opposite the piston 540) including a lever 610 rotationally fixed to and end of the control rod 550. When the lever 610 is rotated about the long axis of the rod 550, the rod 550 is correspondingly rotated which in turn rotates valve 560 and passages 565. Note that in lieu of or in addition to the lever 610, a motor 615 or other suitable motive device (labeled "motor") may be attached to rod 550 to provide rotation of rod 550 in response to electric or hydraulic (pneumatic) or other suitable input.

The lever 610 includes an indexing mechanism retaining it in intermediate positions between the lever slot walls 620 thereby proving "modal" damping adjustment selection. For example the lever 610 may have 3 "click in" positions corresponding to three desired damping stiffness's resulting from three rotational positions of valve 560 (via rod 550 and lever 610). In one embodiment the motor is an encoder and is capable of rotating the valve 560 to an effectively infinite number of positions between valve 560 full open and valve 560 full closed. As such the so equipped suspension (shock) may have a highly variable and selectable damping function that for example could be selected based on terrain or speed or other relevant driving factors. However, once selected, the damping selection is not changed by pressure variations in the shock caused by compression and extension during use.

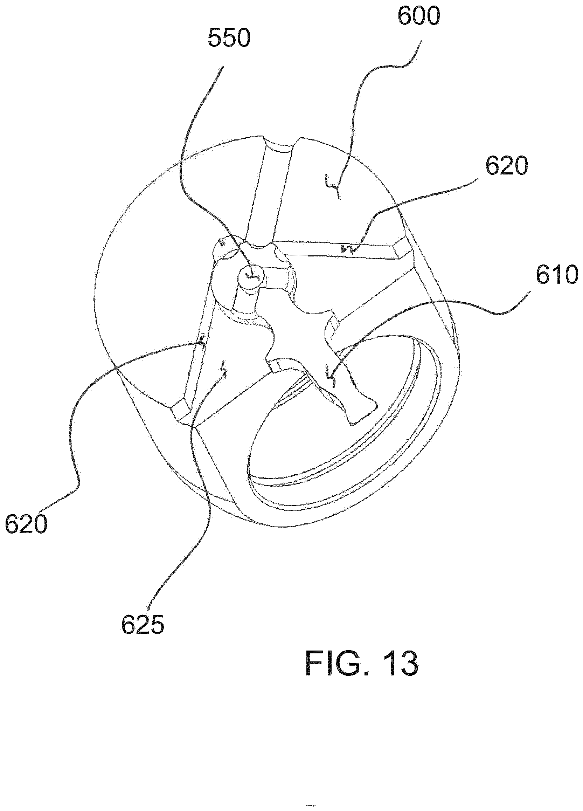

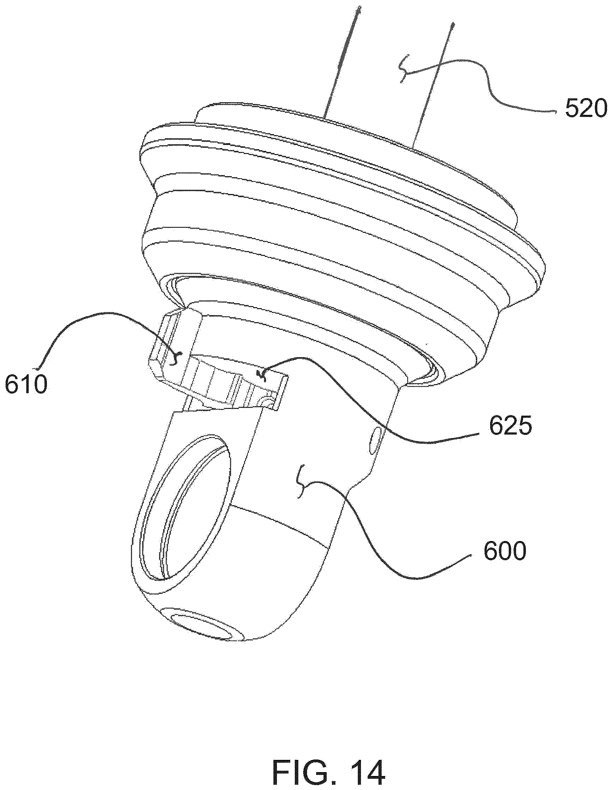

Figure 13 shows a cross section of eyelet 600 exposing the connection between lever 610 and rod 550 as well as the rotational travel limits for lever 610 that are provided by the walls 620 of the lever slot 625. Figure 14 shows another view of the eyelet assembly 600 showing the lever 610 within the lever slot 625.

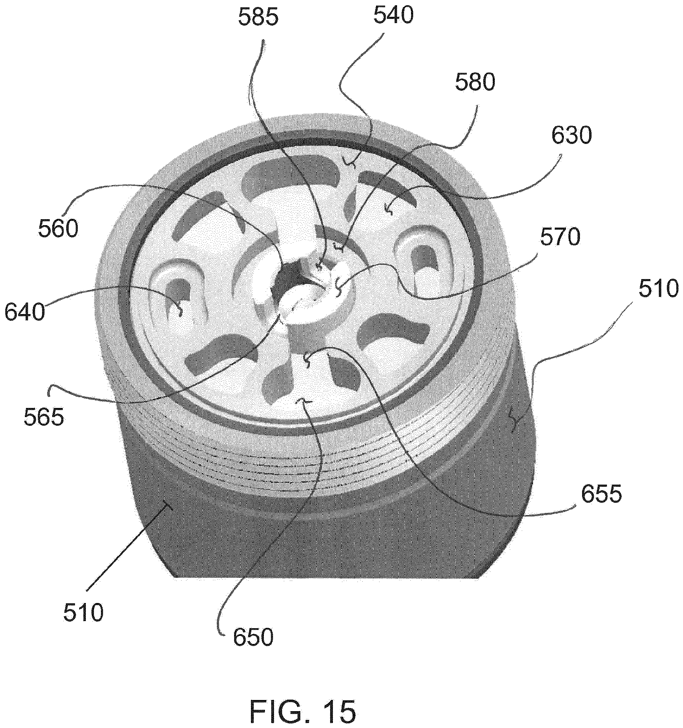

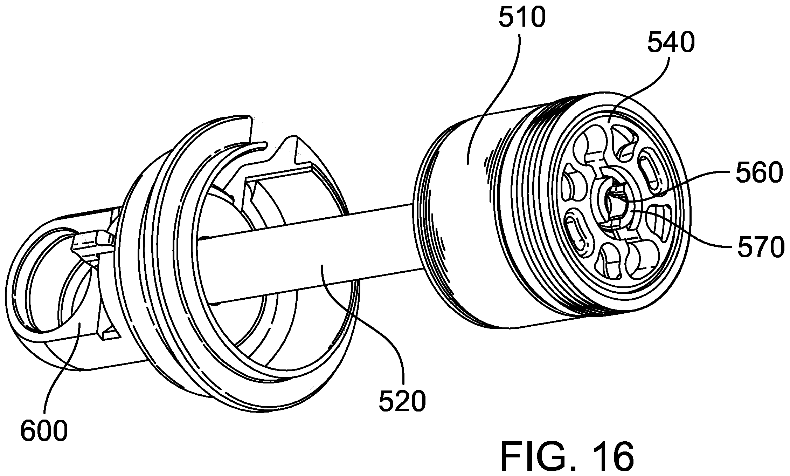

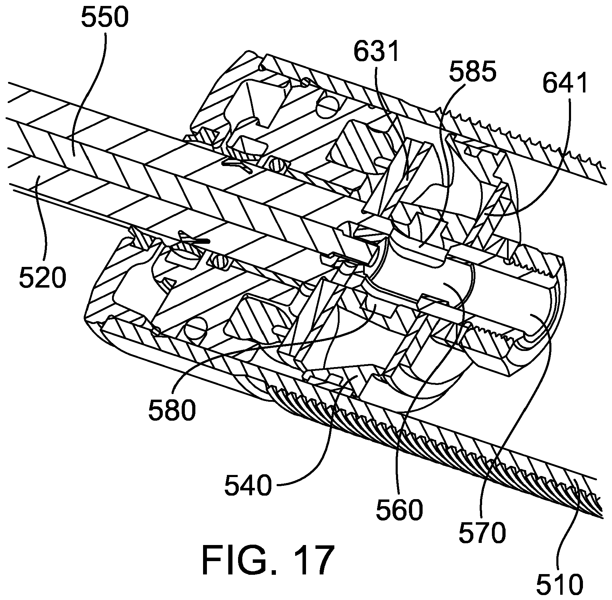

Figure 15 shows an embodiment, in cross section of the piston 540 and the threaded tube 510. As shown the piston 540 is mounted to the valve recess 570 (having shaft windows 585 as described above). Inside the valve recess 570 and coaxial therewith is shown the valve member 560 with passageways 565. The piston 540 includes typical compression ports 630 and rebound ports 640 (shims not shown in Figure 15, but visible in Fig. 10 as items 631 and 641), and also bypass ports 650 in fluid communication the annular distributor 580 via flow channels 655. Figure 16 shows the relationship between the threaded body 510, piston rod 520 and eyelet assembly 600. Figure 17 is a an additional view showing a configuration as in Figure 11 where passageways 565 are aligned with shaft windows 585 thereby allowing fluid communication from shaft interior 575 to annular flow distributor 580 and on to channels 655 and bypass ports 650 (see also Figure 15).

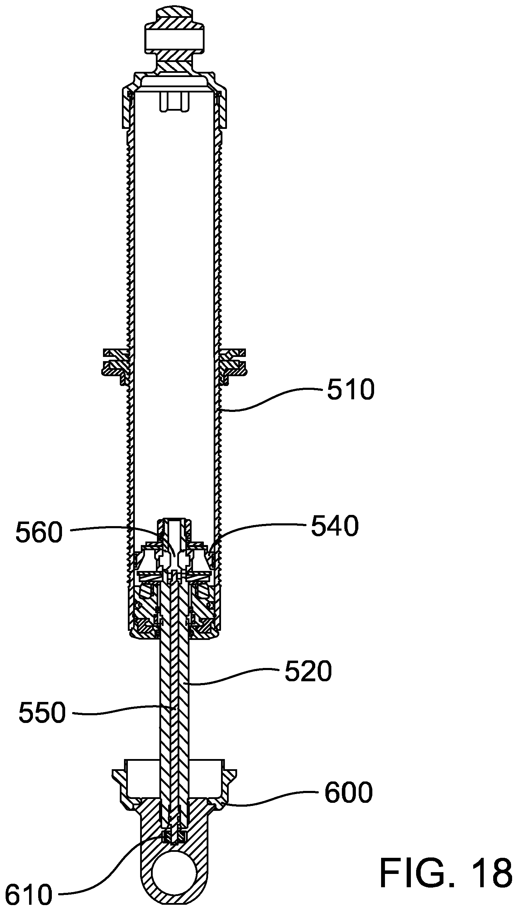

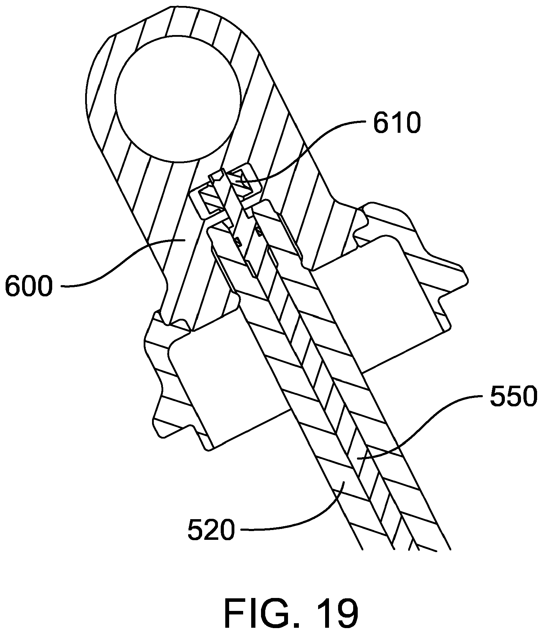

Figure 18 shows another embodiment of a shock absorber in section illustrating the related mechanisms therein. The same reference numerals have been used to indicate corresponding parts to the embodiment of Figures 9 to 17. The shock absorber of Figure 18 is of the monotube type and therefore does not have a "piggy-back" reservoir. Figure 19 shows a view of the lower eyelet assembly including lever 610 and connection to rod 550.

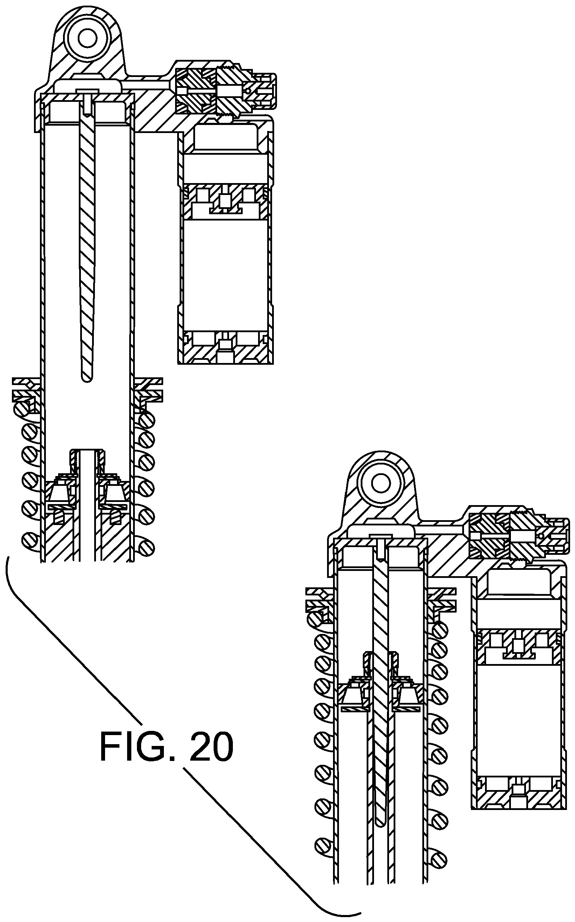

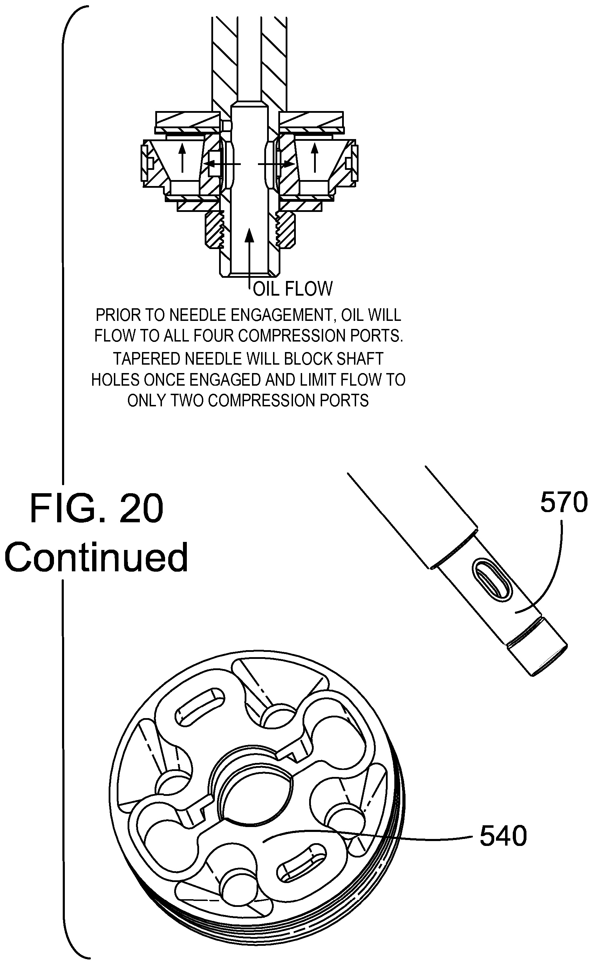

Figure 20 describes the operation of a simpler embodiment whereby windows (such as 585) are opened or closed by the respective excursion or incursion of a needle 660 (similar to the needle 301 of Figure 5A for example) during rebound or compression of the shock respectively. Note that in addition to the control feature described herein via rod 550 and valve 560 a needle may also be employed to provide a position sensitive damping function.

In one embodiment the shock absorber hereof includes the adjustment feature provided by valve 560 as well as the position sensitive feature as provided by a needle valve as described for example in the embodiments of Figures 2 to 8 above. Such a shock absorber would be stiffer with increased compression but such stiffness would begin or baseline from a pre-selected base damping level. In one embodiment a shock absorber hereof further includes an adjustable rebound shim preload of other suitable rebound damping adjuster.

In one embodiment, the shock absorber herein may be used on the front, rear or both of a four wheeled vehicle and the "motor" is connected to a circuit having sensors for any or all of vehicle roll, pitch and yaw. The circuit further includes a programmable processor for receiving sensor data and signaling the appropriate motor or motors (e.g. one each at each of the four vehicle "corners") to either open or close the piston valve (e.g. 560) to correspondingly soften or stiffen the respective shock absorber damping. One embodiment includes sensors for braking, accelerating, and / or turning. In one embodiment the motors are controlled by a switch in the cockpit of the so equipped vehicle. In one embodiment the switch or switches operate a circuit which supplies power to the motor or motors. In one embodiment the switch is wireless and sends a signal to a circuit which supplies power to the "motor." In one embodiment the switch is a personal computing device such as one including a cell phone (e.g. Apple iPhone or Android device). Other suitable motor control mechanisms may be employed.

## Claims

1. A vehicle suspension damper comprising:
a cylinder (402) containing damping fluid and a piston assembly comprising a piston, (466) a piston rod (405), a first fluid path (451) and a second fluid path (452) through the piston assembly for permitting damping fluid to pass from a first side to a second side of the piston during a compression stroke of the vehicle suspension damper;
wherein said second fluid path (452) comprises a bore (435) in said piston rod, which bore has a first fluid port open to said first side of said piston and a second fluid port (440) providing fluid communication with an interior of said piston, and the piston comprises a third fluid port providing fluid communication with the interior whereby, during a compression stroke, damping fluid may flow from the first side to the second side of the piston through the piston rod and the piston via the first, second and third fluid ports;
a valve member (201, 301) for resisting fluid flow through the second fluid path, wherein the valve member is moved into the bore during compression and out the bore during extension, so as to displace at least some of the damping fluid through the first, second and third fluid ports, and wherein said valve member comprises a needle or needle-like member sized to be inserted into and withdrawn from said bore, whereby
said valve member (201, 301) provides a restriction to fluid flow through the second fluid path (452), the restriction being independent of the pressure of the damping fluid caused by compression of the vehicle suspension damper
**characterized in that** said bore (435) comprises a blind bore and **in that**, in use, as said valve member (201, 301) is moved into the bore (435) during compression the valve member (201, 301) firstly begins to block the second fluid path (452), thereby forcing said damping fluid to flow through the piston (466) via the first fluid path (451), and
secondly said valve member (201, 301) blocks the second fluid path (452), thereby blocking additional damping fluid from leaving the bore (435) via the second fluid path (452) whereby fluid pressure builds up within the bore (435) to oppose any further compression of the damper (400).

2. A vehicle suspension damper as claimed in claim 1, wherein in use the restriction provided by said valve member is dependent on the position of said suspension damper in a compression stroke.

3. A vehicle suspension damper as claimed in claim 1 or 2, wherein said valve member is configured to enter said bore toward a maximum compression of said suspension damper.

4. A vehicle suspension damper as claimed in any of claims 1 to 3, wherein said vehicle suspension damper comprises a floating piston in said cylinder, with a gas on one side of said floating piston and said damping fluid on the other side, and wherein said needle is mounted at one end of said cylinder so that it projects through said floating piston and into the internal volume of the cylinder, and wherein said floating piston is annular so as to surround said needle and provide a fluid seal between either side thereof.

5. A vehicle suspension damper as claimed in any preceding claim, wherein in use the restriction provided by said valve member is independent of the position of said suspension damper in a compression stroke.

6. A vehicle suspension damper as claimed in any preceding claim, wherein said valve member is adjustable to control the size of the restriction.

7. A vehicle suspension damper as claimed in claim 6, further comprising a control apparatus, optionally adjustable by an electronic control apparatus, for effecting said adjustment.

8. A vehicle suspension damper as claimed in claim 7, wherein said adjustability is provided by a control rod within said piston rod, which control rod has a first end connected to said valve member and a second end movable by said control apparatus, wherein in use movement of said second end effects corresponding movement of said first end and said valve member, and optionally wherein, during a compression stroke, the valve member stays in the position at which it was set by the control apparatus before the compression stroke.

9. A vehicle suspension damper as claimed in claim 6, 7 or 8, wherein said valve member comprises a body having at least one fluid port and a wall, the body movable between a first position in which said fluid port is open to said second fluid path, and a second position in which said wall obstructs said second fluid path;
and optionally wherein said body is (i) movable to substantially any position, or (ii) movable to indexed positions, between said first and second positions.

10. A vehicle suspension damper as claimed in any preceding claim, further comprising a third fluid flow path between said first and second sides of said piston, the arrangement being such that, in use, said first and second fluid flow paths permit flow of damping fluid during compression of said suspension damper, and said third fluid flow path permits flow of damping fluid during extension of said suspension damper, whereby said valve member provides said suspension damper with an adjustable damping rate, and said third fluid path provides said suspension damper with a rebound rate independent of the restriction provided by said valve member.

11. A vehicle suspension damper as claimed in any preceding claim, wherein said piston assembly further comprises a compression shim arranged to provide resistance to fluid passing through both of said first and second fluid paths during a compression stroke of said vehicle suspension damper.

12. A vehicle comprising a vehicle suspension damper as claimed in any preceding claim.

## Patentansprüche

1. Fahrzeugaufhängungsdämpfer, umfassend:
einen Zylinder (402), der Dämpfungsfluid enthält und eine Kolbenanordnung, die einen Kolben (466), eine Kolbenstange (405), einen ersten Fluidweg (451) und einen zweiten Fluidweg (452) durch die Kolbenanordnung umfasst, um zu ermöglichen, dass Dämpfungsfluid während eines Kompressionshubs des Fahrzeugaufhängungsdämpfers von einer ersten Seite zu einer zweiten Seite des Kolbens gelangt;
wobei der zweite Fluidweg (452) eine Bohrung (435) in der Kolbenstange umfasst, wobei die Bohrung einen ersten Fluidanschluss aufweist, der zu der ersten Seite des Kolbens offen ist, und einen zweiten Fluidanschluss (440), der eine Fluidverbindung mit einem Inneren des Kolbens herstellt, und der Kolben einen dritten Fluidanschluss umfasst, der eine Fluidverbindung mit dem Inneren herstellt, wodurch während eines Kompressionshubs Dämpfungsfluid von der ersten Seite zur zweiten Seite des Kolbens durch die Kolbenstange und den Kolben über den ersten, zweiten und dritten Fluidanschluss fließen kann;
ein Ventilelement (201, 301) zum Widerstand gegen einen Fluidstrom durch den zweiten Fluidweg, wobei das Ventilelement während der Kompression in die Bohrung hinein und während der Expansion aus der Bohrung herausbewegt wird, um zumindest einen Teil des Dämpfungsfluids durch den ersten, zweiten und dritten Fluidanschluss zu verdrängen, und wobei das Ventilelement ein nadelförmiges oder nadelähnliches Element umfasst, das zum Einsetzen in die und Herausziehen aus der Bohrung bemessen ist, wobei
das Ventilelement (201, 301) eine Beschränkung des Fluidstroms durch den zweiten Fluidweg (452) vorsieht, wobei die Beschränkung unabhängig von dem Druck des Dämpfungsfluids ist, der durch die Kompression des Fahrzeugaufhängungsdämpfers verursacht wird,
**dadurch gekennzeichnet, dass** die Bohrung (485) eine Sacklochbohrung umfasst, und dadurch, dass im Einsatz, wenn das Ventilelement (201, 301) während der Kompression in die Bohrung (485) bewegt wird, das Ventilelement (201, 301) zuerst beginnt, den zweiten Fluidweg (452) zu blockieren, wodurch es das Dämpfungsfluid zwingt, durch den Kolben (466) über den ersten Fluidweg (451) zu fließen, und zweitens das Ventilelement (201, 301) den zweiten Fluidweg (452) blockiert, wodurch es zusätzliches Dämpfungsfluid daran hindert, die Bohrung über den zweiten Fluidweg (492) zu verlassen, wodurch sich Fluiddruck innerhalb der Bohrung (435) aufbaut, um jeder weiteren Kompression des Dämpfers (400) entgegenzuwirken (435).

2. Fahrzeugaufhängungsdämpfer nach Anspruch 1, wobei im Einsatz die von dem Ventilelement vorgesehene Beschränkung von der Position des Aufhängungsdämpfers in einem Kompressionshub abhängig ist.

3. Fahrzeugaufhängungsdämpfer nach Anspruch 1 oder 2, wobei das Ventilelement eingerichtet ist, um in die Bohrung in Richtung einer maximalen Kompression des Aufhängungsdämpfers zu gelangen.

4. Fahrzeugaufhängungsdämpfer nach einem der Ansprüche 1 bis 3, wobei der Fahrzeugaufhängungsdämpfer einen schwimmenden Kolben in dem Zylinder umfasst mit einem Gas auf der einen Seite des schwimmenden Kolbens und dem Dämpfungsfluid auf der anderen Seite, und wobei die Nadel an einem Ende des Zylinders so angebracht ist, dass sie durch den schwimmenden Kolben und in das Innenvolumen des Zylinders hineinragt, und wobei der schwimmende Kolben ringförmig ist, um die Nadel zu umschließen und eine Fluiddichtung zwischen den beiden Seiten zu schaffen.

5. Fahrzeugaufhängungsdämpfer, nach einem der vorangegangenen Ansprüche, wobei im Einsatz die von dem Ventilelement vorgesehene Beschränkung unabhängig von der Position des Aufhängungsdämpfers in einem Kompressionshub ist.

6. Fahrzeugaufhängungsdämpfer nach einem der vorangegangenen Ansprüche, wobei das Ventilelement einstellbar ist, um die Größe der Beschränkung zu steuern.

7. Fahrzeugaufhängungsdämpfer nach Anspruch 6, des Weiteren umfassend eine Steuervorrichtung, wahlweise durch eine elektronische Steuervorrichtung einstellbar, um die Einstellung durchzuführen.

8. Fahrzeugaufhängungsdämpfer nach Anspruch 7, wobei die Einstellbarkeit durch eine Steuerstange innerhalb der Kolbenstange vorgesehen ist, wobei die Steuerstange ein erstes Ende aufweist, das mit dem Ventilelement verbunden ist, und ein zweites Ende, das durch die Steuervorrichtung bewegbar ist, wobei im Einsatz die Bewegung des zweiten Endes eine entsprechende Bewegung des ersten Endes und des Ventilelements bewirkt, und wahlweise wobei während eines Kompressionshubs das Ventilelement in der Position verbleibt, in die es durch die Steuervorrichtung vor dem Kompressionshub versetzt wurde.

9. Fahrzeugaufhängungsdämpfer nach Anspruch 6, 7 oder 8, wobei das Ventilelement einen Körper umfasst, der mindestens einen Fluidanschluss und eine Wand aufweist, wobei der Körper zwischen einer ersten Position, in der der Fluidanschluss für den zweiten Fluidweg offen ist, und einer zweiten Position, in der die Wand den zweiten Fluidweg blockiert, bewegbar ist; und
wahlweise, wobei der Körper (i) im Wesentlichen in jede Position bewegbar ist, oder (ii) in indexierte Positionen zwischen der ersten und zweiten Position bewegbar ist.

10. Fahrzeugaufhängungsdämpfer, nach einem der vorangegangenen Ansprüche, des Weiteren umfassend einen dritten Fluidströmungsweg zwischen der ersten und zweiten Seite des Kolbens, wobei die Anordnung dergestalt ist, dass im Einsatz der erste und zweite Fluidströmungspfad einen Fluss des Dämpfungsfluids während der Kompression des Aufhängungsdämpfers ermöglichen, und der dritte Fluidströmungspfad einen Fluss des Dämpfungsfluids während der Expansion des Aufhängungsdämpfers ermöglicht, wodurch das Ventilelement für den Aufhängungsdämpfer eine einstellbare Dämpfungsrate vorsieht, und der dritte Fluidweg für den Aufhängungsdämpfer einer Rückstoßrate vorsieht unabhängig von der durch das Ventilelement vorgesehenen Einschränkung.

11. Fahrzeugaufhängungsdämpfer, nach einem der vorangegangenen Ansprüche, wobei die Kolbenanordnung des Weiteren eine Kompressionsscheibe umfasst, die so angeordnet ist, dass sie einen Widerstand gegen Fluid vorsieht, das während eines Kompressionshubs des Fahrzeugaufhängungsdämpfers sowohl durch den ersten als auch den zweiten Fluidweg strömt.

12. Fahrzeug, umfassend einen Fahrzeugaufhängungsdämpfer nach einem der vorangegangenen Ansprüche

## Revendications

1. Amortisseur de suspension de véhicule comprenant :
- un cylindre (402) contenant un liquide d'amortissement et un ensemble de piston comprenant un piston (466), une tige de piston (405), un premier chemin de liquide (451) et un deuxième chemin de liquide (452) à travers l'ensemble de piston pour permettre au liquide d'amortissement de passer d'un premier côté à un deuxième côté du piston pendant une course de compression de l'amortisseur de suspension de véhicule ;
dans lequel ledit deuxième chemin de liquide (452) comprend un alésage (435) dans ladite tige de piston, lequel alésage a un premier orifice de liquide ouvert sur ledit premier côté dudit piston et un deuxième orifice de liquide (440) assurant une communication liquide avec un intérieur dudit piston, et le piston comprend un troisième orifice de liquide assurant une communication liquide avec l'intérieur, de sorte que, pendant une course de compression, le liquide d'amortissement puisse s'écouler du premier côté au deuxième côté du piston, à travers la tige de piston et le piston, par l'intermédiaire des premier, deuxième et troisième orifices de liquide ;
- un élément de soupape (201, 301) pour résister à un écoulement de liquide à travers le deuxième chemin de liquide, dans lequel l'élément de soupape est déplacé dans l'alésage pendant la compression et hors de l'alésage pendant la détente, de façon à déplacer au moins une partie du liquide d'amortissement à travers les premier, deuxième et troisième orifices de liquide, et dans lequel ledit élément de soupape comprend une aiguille ou un élément analogue à une aiguille dimensionné pour être inséré dans ledit alésage et retiré de celui-ci, de sorte que ledit élément de soupape (201, 301) assure une restriction à l'écoulement de liquide à travers le deuxième chemin de liquide (452), la restriction étant indépendante de la pression du liquide d'amortissement causée par la compression de l'amortisseur de suspension de véhicule
**caractérisé en ce que** ledit alésage (435) comprend un alésage borgne et **en ce que**, en conditions d'utilisation, pendant que ledit élément de soupape (201, 301) est déplacé dans l'alésage (435) pendant la compression, l'élément de soupape (201, 301) commence d'abord par boucher le deuxième chemin de liquide (452), forçant ainsi ledit liquide d'amortissement à s'écouler à travers le piston (466) par l'intermédiaire du premier chemin de liquide (451), et ensuite ledit élément de soupape (201, 301) bouche le deuxième chemin de liquide (452), empêchant ainsi davantage de liquide d'amortissement de sortir de l'alésage (435) par l'intermédiaire du deuxième chemin de liquide (452), de sorte que la pression de liquide s'accumule à l'intérieur de l'alésage (435) pour s'opposer à toute compression supplémentaire de l'amortisseur (400).

2. Amortisseur de suspension de véhicule selon la revendication 1, dans lequel, en conditions d'utilisation, la restriction assurée par ledit élément de soupape est dépendante de la position dudit amortisseur de suspension dans une course de compression.

3. Amortisseur de suspension de véhicule selon la revendication 1 ou 2, dans lequel ledit élément de soupape est configuré pour entrer dans ledit alésage vers une compression maximale dudit élément de suspension.

4. Amortisseur de suspension de véhicule selon l'une quelconque des revendications 1 à 3, dans lequel ledit amortisseur de suspension de véhicule comprend un piston flottant dans ledit cylindre, avec un gaz d'un côté dudit piston flottant et ledit liquide d'amortissement de l'autre côté, et dans lequel ladite aiguille est montée à une extrémité dudit cylindre de façon à faire saillie à travers ledit piston flottant et dans le volume interne du cylindre, et dans lequel ledit piston flottant est annulaire de façon à entourer ladite aiguille et à former un joint étanche aux liquides entre l'un ou l'autre de ses côtés.

5. Amortisseur de suspension de véhicule selon l'une quelconque des revendications précédentes, dans lequel, en conditions d'utilisation, la restriction assurée par ledit élément de soupape est indépendante de la position dudit amortisseur de suspension dans une course de compression.

6. Amortisseur de suspension de véhicule selon l'une quelconque des revendications précédentes, dans lequel ledit élément de soupape est réglable pour commander la taille de la restriction.

7. Amortisseur de suspension de véhicule selon la revendication 6, comprenant en outre un appareil de commande, éventuellement réglable par un appareil de commande électronique, pour effectuer ledit réglage.

8. Amortisseur de suspension de véhicule selon la revendication 7, dans lequel ledit réglage est assuré par une bielle de commande à l'intérieur de ladite tige de piston, laquelle bielle de commande a une première extrémité reliée audit élément de soupape et une deuxième extrémité déplaçable par ledit appareil de commande, dans lequel, en conditions d'utilisation, le déplacement de ladite deuxième extrémité effectue un déplacement correspondant de ladite première extrémité et dudit élément de soupape, et dans lequel éventuellement, pendant une course de compression, l'élément de soupape reste dans la position dans laquelle il a été réglé par l'appareil de commande avant la course de compression.

9. Amortisseur de suspension de véhicule selon la revendication 6, 7 ou 8, dans lequel ledit élément de soupape comprend un corps ayant au moins un orifice de liquide et une paroi, le corps étant déplaçable entre une première position dans laquelle ledit orifice de liquide est ouvert sur ledit deuxième chemin de liquide, et une deuxième position dans laquelle ladite paroi bouche ledit deuxième chemin de liquide ;
et dans lequel éventuellement ledit corps est (i) déplaçable dans essentiellement n'importe quelle position ou (ii) déplaçable dans des positions indexées, entre lesdites première et deuxième positions.

10. Amortisseur de suspension de véhicule selon l'une quelconque des revendications précédentes, comprenant en outre un troisième chemin d'écoulement de liquide entre lesdits premier et deuxième côtés dudit piston, la configuration étant telle qu'en conditions d'utilisation, lesdits premier et deuxième chemins d'écoulement de liquide permettent l'écoulement de liquide d'amortissement pendant la compression dudit amortisseur de suspension, et ledit troisième chemin d'écoulement de liquide permet l'écoulement de liquide d'amortissement pendant la détente dudit amortisseur de suspension, de sorte que ledit élément de soupape fournisse audit amortisseur de suspension une vitesse d'amortissement réglable, et ledit troisième chemin de liquide fournisse audit amortisseur de suspension une vitesse de rebond indépendante de la restriction assurée par ledit élément de soupape.

11. Amortisseur de suspension de véhicule selon l'une quelconque des revendications précédentes, dans lequel ledit ensemble de piston comprend en outre une cale de compression configurée pour offrir une résistance au passage de liquide à travers les deux desdits premier et deuxième chemins de liquide pendant une course de compression dudit amortisseur de suspension de véhicule.

12. Véhicule comprenant un amortisseur de suspension de véhicule selon l'une quelconque des revendications précédentes.
